# EUROPÄISCHE PATENTSCHRIFT

(11) **EP 1 555 169 B1**
(45) Veröffentlichungstag und Bekanntmachung des Hinweises auf die Patenterteilung: **07.03.2007**
(21) Anmeldenummer: 05000050.4
(22) Anmeldetag: 04.01.2005
(51) Int. Cl.: B60R 21/20

(54) **Flexible Airbagklappe**
Flexible airbag cover
Couvercle d'airbag flexible

(30) Priorität: 16.01.2004 DE 102004002478
(43) Veröffentlichungstag der Anmeldung: 20.07.2005
(73) Patentinhaber: Lisa Dräxlmaier GmbH, 84137 Vilsbiburg (DE)
(72) Erfinder: Lanzinger, Marcus, 84562 Mettenheim (DE); Sachtleben, Bernd, 84544 Aschau (DE); Müller, Henry, Dr., 84030 Landshut (DE); Ziegler, Herbert, 93359 Wildenberg (DE); Winterhoff, Thomas, 84144 Geisenhausen (DE); Schlemmer, Christian, 84034 Müchnerau (DE)
(74) Vertreter: HOFFMANN EITLE

(56) Entgegenhaltungen:
- EP-A- 1 354 773
- DE-A1- 10 151 715
- PATENT ABSTRACTS OF JAPAN Bd. 1995, Nr. 06, 31. Juli 1995 (1995-07-31) -& JP 07 069159 A (TAKATA KK), 14. März 1995 (1995-03-14)

## Beschreibung

### Gebiet der Erfindung

Die Erfindung betrifft eine flexible Airbagklappe eines Airbagmoduls, insbesondere zur Verwendung in Kraftfahrzeugen sowie ein Verfahren zu deren Herstellung.

### Stand der Technik

In Kraftfahrzeugen wird zum Schutz der Insassen üblicherweise ein in einem Airbagmodul angeordneter Airbag hinter einer mit einer Dekorschicht versehenen Innenverkleidung angeordnet. Im Falle einer Kollision wird dann ein ebenfalls in dem Airbagmodul angeordnetes Schussmodul aktiviert, wodurch ein üblicherweise gefaltet oder aufgerollt angeordneter Airbag explosionsartig mit einem Gas gefüllt wird. Durch die hiermit verbundene Volumenexpansion des Airbags werden Teile der Innenverkleidung aus ihrer Position abgesprengt oder zumindest zur Seite geschwenkt.

Die Innenverkleidungen sind dabei so ausgestaltet, dass sie entlang vorab definierter Aufreißlinien aufbrechen und somit die ungehinderte Entfaltung des Airbags auf seine gewünschte Größe ermöglichen. Dabei muss vor allem darauf geachtet werden, dass die durch den Airbag zu schützenden Insassen nicht durch die üblicherweise starren Innenverkleidungsteile behindert oder verletzt werden können. Dies ist insbesondere dann von Bedeutung, wenn sich die Insassen nicht in einer üblichen, aufrechten Sitzposition befinden, sondern während der Kollision eine sogenannte "out of position"-Haltung einnehmen.

Dieses Problem führte in der Vergangenheit auch zu verschärften gesetzlichen Auflagen, die eine neue Ausgestaltung der über einem Airbag angeordneten Dekorträger erforderten.

Es wurden daher flexible Abdeckungen für ein Airbagmodul entwickelt, bei denen zum einen die von dem expandierenden Airbag zu bewegende Masse auf ein Minimum reduziert wurde, zum anderen das Verletzungsrisiko auch im Falle der Berührung des Fahrzeuginsassen mit der flexiblen Airbagabdeckung verringert wurde. Darüber hinaus wurde in der EP 1 106 445 A1 ein in ein Innenverkleidungsteil integriertes Airbagsystem vorgeschlagen, bei dem das Airbagmodul allein an dem Dekorträger befestigt werden kann. Die EP 1 106 445 A1 sieht zu diesem Zweck vor, das Airbagmodul von der dem Fahrzeuginsassen zugewandten Seite des Dekorträgers aus einzubauen, mit einer Schaumschicht zu bedecken, und die flexible Abdeckung flächig mit einem Teil des Airbags in Verbindung zu bringen. Dieses Verfahren stellte sich jedoch in der Praxis als besonders aufwändig dar und erzeugte erhebliche Nachteile hinsichtlich der Oberflächenqualität des Dekorträgers und der Prozesssicherheit bei Verwendung des Airbags.

Die DE 101 51 715 A beschreibt eine Airbagklappe gemäß dem Oberbegriff des Anspruchs 1. Darüber hinaus beschreibt die JP 07 69159 ein Verfahren gemäß dem Oberbegriff des Anspruchs 16. Bei diesem Stand der Technik ist die Verbindung vom Rahmen und Dekorträger mit zusätzlichem Aufwand zu gestalten.

### Darstellung der Erfindung

Es war daher eine Aufgabe der Erfindung, eine weiter gebildete flexible Airbagklappe eines Airbagmoduls zur Verfügung zu stellen.

Diese Aufgabe der Erfindung wird durch die flexible Airbagklappe mit den Merkmalen des Anspruchs 1 und das Verfahren zur Herstellung einer solchen flexiblen Airbagklappe mit den Merkmalen des Anspruchs 16 gelöst. Vorteilhafte Ausgestaltungen der Erfindung befinden sich in den jeweiligen abhängigen Ansprüchen.

Erfindungsgemäß wird ein Rahmen, vorzugsweise ein Metallrahmen, mit einem Dekorträger einer Instrumententafel verbunden und das Airbagmodul an diesem Rahmen befestigt. Dabei wird darauf verzichtet, das Airbagmodul zusätzlich an einem die Instrumententafel abstützenden Querträger zu befestigen. Der Dekorträger ist dabei erfindungsgemäß einstückig ausgebildet und weist im Bereich der flexiblen Airbagklappe eine verminderte Wandstärke auf. Die flexible Airbagklappe wird dabei im Wesentlichen von dem in dem unterhalb des Dekorträgers angeordneten Airbagmodul gespeicherten Airbag abgestützt. Der Rahmen ist dabei durch Aufschäumen des Dekorträger-Materials sowohl an der Oberseite als auch der Unterseite des Rahmens vollständig vom Dekorträger-Material umgeben. Bei dem Verfahren zur Herstellung einer derartigen flexiblen Airbagklappe wird der Rahmen in erfindungsgemäßer Weise in einem formgebenden Werkzeug angeordnet und anschließend mit einem den Dekorträger und die flexible Airbagklappe bildenden, aufschäumenden Material verbunden, so dass der Rahmen sowohl von der Unterseite als auch der Oberseite vom Dekorträger-Material umgeben ist.

Die flexible Airbagklappe gemäß der Erfindung ist besonders einfach und vorzugsweise in einem einzigen Arbeitsgang herstellbar und bietet eine ausreichende Oberflächenqualität und Prozesssicherheit. Überraschenderweise hat sich gezeigt, dass bei Verwendung eines in dem Dekorträger integrierten Rahmens zur Befestigung des Airbagmoduls die Wandstärke und damit auch die Masse der flexiblen Airbagklappe auch bei einstückiger Ausgestaltung und Anfertigung des Dekorträgers auf ein Minimum reduziert werden kann und dennoch eine ausreichende Stabilität der Airbagabdeckung sowie die erforderliche Prozesssicherheit bei der Entfaltung des Airbags gewährleistet ist. Zudem bietet die erfindungsgemäße flexible Airbagklappe überraschenderweise die Möglichkeit, einen Toleranzausgleich von etwa 2 mm zwischen dem Dekorträger und dem Airbagmodul auszuführen und somit Ungenauigkeiten von zu montierenden Bauteilen bei der Fertigung ohne Nachteile für die Prozesssicherheit auszugleichen.

Die Flexibilität der Airbagklappe ist im Sinne der Erfindung regelmäßig dann gewährleistet, wenn das Material in der Lage ist, ohne wesentlichen zusätzlichen Kraftaufwand umgebogen zu werden. Dies ist auch dann gewährleistet, wenn das flexible Material eine gewisse Steifigkeit zur Gewährleistung seiner den Airbag abdeckenden Funktion aufweist. Ein wesentliches Kriterium für die Flexibilität der Abdeckung im Sinne der Erfindung ist regelmäßig die Reduzierung der zu bewegenden Masse sowie die Reduzierung der zur Expansion des Airbags erforderlichen Kraft.

In einer bevorzugten Ausgestaltung der erfindungsgemäßen Airbagklappe beträgt die verminderte Wandstärke des Dekorträgers im Bereich der flexiblen Airbagklappe 1 bis 3 mm. In einer besonders bevorzugten Ausführungsform beträgt die Wandstärke 1,5 bis 2 mm. Hierdurch wird in besonders vorteilhafter Weise eine flexible Airbagklappe zur Verfügung gestellt, bei der die Wandstärke auf ein Minimum reduziert wurde und dennoch eine ausreichende Stabilität des Dekorträgers sowie der erforderliche Schutz für den unterhalb des Dekorträgers angeordneten Airbag, insbesondere vor mechanischer Beeinträchtigung durch den Fahrzeuginsassen oder im Fahrzeug befindliche Gegenstände, gewährleistet ist.

In einer weiteren bevorzugten Ausführungsform der Erfindung ist der Dekorträger auf der dem Fahrzeuginnenraum zugewandten Seite zusätzlich mit einer Dekorschicht bedeckt. In einer besonders bevorzugten Ausführungsform der Erfindung besteht diese zusätzliche Dekorschicht aus Leder oder einem lederähnlichen Material. Hierdurch wird ein Innenverkleidungsteil für ein Fahrzeug geschaffen, das bei nahezu gleichbleibender Prozesssicherheit beim Entfalten des Airbags eine besonders vorteilhafte Optik bietet.

In einer ganz besonders bevorzugten Ausführungsform weist die zusätzliche Dekorschicht zumindest teilweise Schwächungsbereiche auf, die als Aufreißpunkte oder Aufreißlinien bei der Airbagentfaltung dienen. Die Aufreißlinien können dabei jede denkbare Form aufweisen, die eine vollständige Öffnung des Airbags ermöglicht. Bevorzugte Formen sind dabei vorzugsweise gerade Linien, eine im Wesentlichen U-förmige oder H-förmige Gestaltung aber auch Kreuz- oder Tetraform, bei der von den Spitzen einer im Wesentlichen zentralen Linie Schwächungslinien wenigstens teilweise zu den Eckbereichen der Airbagklappe verlaufen.

Dabei können die Schwächungslinien sowohl symmetrisch als auch asymmetrisch auf der Airbagklappe angeordnet sein. Es ist jedoch bevorzugt, dass durch die Anordnung der Schwächungslinien das Öffnungsverhalten des Airbags nicht negativ beeinflusst wird.

In einer überaus bevorzugten Ausführungsform sind diese Schwächungsbereiche in den Randbereichen der flexiblen Airbagklappe angeordnet. Hierdurch wird ein Innenverkleidungsteil mit integrierter flexibler Airbagklappe geschaffen, bei dem die Dekorschicht entlang vorab definierter Linien aufreißt und somit die Entfaltung des Airbags vorteilhaft unterstützt.

In einer weiteren vorteilhaften Ausführungsform der vorliegenden Erfindung weist die flexible Airbagklappe ein oder mehrere Scharniere auf, um die sie bei Entfaltung des Airbags umgeklappt werden kann. In einer besonders bevorzugten Ausführungsform werden diese Scharniere von nicht geschwächten Bereichen des Dekorträgers und/oder der Dekorschicht gebildet. In einer ganz besonders bevorzugten Ausführungsform sind die Scharniere überdies fluchtend zu den oben genannten Aufreißlinien angeordnet. In einer überaus bevorzugten Ausführungsform werden die Scharniere zusätzlich mit einer flexiblen Verstärkung, vorzugsweise einem Gewebematerial versehen.

Hierdurch wird auf besonders vorteilhafte Weise eine flexible Airbagklappe geschaffen, die entlang einer vordefinierten Umklappkante aus dem Gefahrenbereich für den Fahrzeuginsassen ausschert und zudem eine vorab definierbare Entfaltungsrichtung für den expandierenden Airbag ermöglicht. Zudem ist insbesondere unter Verwendung einer zusätzlichen flexiblen Verstärkung gewährleistet, dass die flexible Airbagklappe auch nach Freigeben des Airbags zumindest an einem Haltepunkt mit dem Dekorträger verbunden bleibt und nicht unkontrolliert durch die Fahrgastzelle fliegen kann.

In einer weiteren bevorzugten Ausgestaltung der Erfindung weist die flexible Airbagklappe zumindest an denjenigen Bereichen, die bei der Entfaltung des Airbags mit diesem in Kontakt kommen können, eine Beschichtung mit besonderen Gleiteigenschaften, vorzugsweise Teflon, auf. Hierdurch wird eine Airbagklappe geschaffen, die das Entlanggleiten des Airbags an der Klappe besonders vorteilhaft unterstützt. Der Airbag kann besser und schneller an der Klappe entlang gleiten, wodurch zum die Gefahr von Verletzungen des Airbagmaterials , zum anderen die Gefahr von Partikelflug vermindert wird.

In einer weiteren bevorzugten Ausführungsform der Erfindung ist zwischen dem Airbag und dem Dekorträger eine Schicht eines flexiblen Materials vorzugsweise vollständig eingeschäumt. Dieses flexible Material ist vorzugsweise derart in der flexiblen Airbagklappe angeordnet, dass es sich über die Umklappbereiche der Airbagklappe hinaus erstreckt und dass somit die oben beschriebene flexible Verstärkung ein Bestandteil des flexiblen Materials darstellt.

In besonders bevorzugter Weise ist dieses flexible Material ein Polyamidgewebe. In einer ganz besonders bevorzugten Ausführungsform ist die eingeschäumte Schicht eine Gewebematte, vorzugsweise ein Maschengewebe oder Vlies, bestehend aus Thermoplaste, vorzugsweise Polyamid-PVC oder Polyester. In einer überaus bevorzugten Ausführungsform der Erfindung besteht diese eingeschäumte Schicht aus einem Verbund von wenigstens zwei Lagen, wobei vorzugsweise zumindest eine der Lagen wenigstens teilweise beschichtet ist.

In einer weiteren bevorzugten Ausgestaltung der Erfindung besteht die eingeschäumte Schicht aus einem vorzugsweise raumfüllend wirkenden Waffelgewebe. Hierdurch kann auf besonders einfache Weise das verwendete Material eingespart werden, ohne dass eine Verminderung der Stabilität der Airbagklappe vorliegt. Insbesondere wird bei Verwendung derartiger Waffelgewebe das Bruchverhalten besonders vorteilhaft eingestellt, wobei vorzugsweise ein etwaiger Partikelflug bei Auslösen des Airbags reduziert werden kann.

In einer weiteren bevorzugten Ausgestaltung der Erfindung ist eine vorzugsweise im Bereich der Schwächungsbereiche partiell verstärkte Matte in der Airbagklappe angeordnet. In besonders bevorzugter Weise besteht diese Matte aus einem Gewebe, bei dem die Verstärkung vorzugsweise durch eine Verringerung des Lochabstands beim Weben erfolgt.

Darüber hinaus werden in einer bevorzugten Ausgestaltung der Erfindung der Dekorträger und das Airbagmodul erst nach der Fertigstellung beider Bauelemente aneinander montiert, vorzugsweise miteinander verschraubt.

Es wird somit eine Vorrichtung geschaffen, bei der der in dem Airbagmodul gespeicherte Airbag von der Dekorschicht getrennt bleibt. Es wird somit vermieden, dass chemische Wechselwirkungen zwischen dem Dekorträgermaterial und dem Airbag-Gewebe auftreten können. Des Weiteren wird durch eine derartige Montage auch ein seitliches Eindringen des Dekorträger-Materials auf den Airbag, beispielsweise durch ein zumindest lokal auftretendes unkontrolliertes Aufschäumen des Dekorträgermaterials, sicher unterbunden.

Die Verbindung zwischen dem Dekorträger und dem Airbagmodul und/oder dem Rahmen erfolgt in einer vorteilhaften Ausführungsform der Erfindung über in dem Dekorträger integrierte Verbindungsmittel. In einer besonders bevorzugten Ausführungsform sind diese Verbindungsmittel Gewindebuchsen, in die geeignete Verbindungselemente, beispielsweise Schrauben oder dergleichen durch den Rahmen in die Verbindungsbuchsen eingeführt werden können. Hierdurch wird eine besonders einfache und sichere Verbindung des Airbagmoduls mit dem Dekorträger erzielt, wobei eine zusätzliche Abstützung des Airbagmoduls, insbesondere an dem Querträger, unterbleiben kann.

Der Rahmen zur Abstützung und Befestigung des Airbagmoduls an dem Dekorträger ist in seiner Form und in seinem Material nicht beschränkt. Jeder Rahmen, der in der Lage ist, eine ausreichende Steifigkeit und Größe zu bieten, das Airbagmodul sicher anzubringen und einen freien, ungehinderten Durchtritt für den expandierenden Airbag zu bieten, ist vom Erfindungsgedanken umfasst.

In einer vorteilhaften Ausführungsform der Erfindung ist der Rahmen jedoch aus einem Metall, vorzugsweise Stahl oder Aluminium gefertigt. Hierdurch wird ein Rahmen erhalten, der besonders einfach, beispielsweise durch Ausstanzen aus einem Blech, hergestellt werden kann, eine etwaig erforderliche Nachbearbeitung ermöglicht und den Dekorträger zusätzlich unterstützen kann.

Der Rahmen kann in einer weiteren bevorzugten Ausführungsform der Erfindung ebenfalls aus einem mit Kunst- oder Naturfasern versetzten Kunststoff bestehen und eine Struktur aufweisen, wie sie in der DE 101 60 185 A1 beschrieben ist. Diese Offenlegungsschrift wird hiermit als Referenz eingeführt und ist somit Teil der Offenbarung.

In einer weiteren bevorzugten Ausführungsform der Erfindung weist der Rahmen eine Form auf, die mit der der flexiblen Airbagklappe korrespondiert. In einer überaus bevorzugten Ausführungsform sind die Größe und die Form des Rahmens so gestaltet, dass die Innenkanten des Rahmens im Wesentlichen unterhalb der Seitenkanten der flexiblen Airbagklappe angeordnet sind. Hierdurch wird in besonders vorteilhafter Weise die Abstützung der flexiblen Airbagklappe unterstützt. Des Weiteren können in dieser besonders bevorzugten Ausführungsform die Innenkanten des Rahmens das Aufreißen und Umklappen der flexiblen Airbagklappe besonders vorteilhaft unterstützen.

In einer weiteren bevorzugten Ausführungsform der Erfindung ist eine flexible Schicht zwischen Rahmen und Dekorträger so angeordnet, dass sie nicht allein die Innenkanten des Rahmens bedeckt, sondern überdies auch die Außenkanten des Rahmens zumindest teilweise abdeckt oder umfasst. Hierdurch wird zum einen erreicht, dass nach Aufbringen des Dekorträger-Materials auf das Airbagmodul eine glatte, verrutschfest angeordnete Unterlage für die flexible Airbagklappe entsteht, wodurch die Abstützung der Airbagklappe besonders vorteilhaft unterstützt wird.

In einer weiteren bevorzugten Ausführungsform der Erfindung besteht der Dekorträger im Wesentlichen aus einem Thermoplast oder einem Polyurethan. In einer besonders bevorzugten Ausführungsform ist daes Polyurethan zusätzlich mit langen Glasfasern versetzt. Hierdurch wird ein Dekorträgermaterial erhalten, welches besonders einfach verarbeitbar ist und eine nahezu beliebig einstellbare Festigkeit und Steifigkeit aufweisen kann.

In einer weiteren Ausführungsform der Erfindung ist die flexible Airbagklappe zusätzlich über ein flexibles Halteband mit dem Dekorträger und/oder dem Rahmen verbunden. Dieses flexible Halteband besteht in einer bevorzugten Ausführungsform der Erfindung aus einem Blech- oder Gewebestreifen, der vorzugsweise direkt beim Aufschäumen mit dem Dekorträger verbunden wird.

Hierdurch wird ein besonders einfach zu erzeugendes Mittel zur Verfügung gestellt, welches sicherstellt, dass auch nach einem etwaig auftretenden unkontrollierten Aufreißen der Scharnierbereiche ein Absprengen der flexiblen Airbagklappe von dem Dekorträger nicht zur Folge hat, dass die flexible Airbagklappe insbesondere in Richtung des zu schützenden Fahrzeuginsassen fliegen kann.

Gemäß eines weiteren Aspekts der vorliegenden Erfindung wird ein Verfahren zur Herstellung einer oben beschriebenen flexiblen Airbagklappe zur Verfügung gestellt, das es ermöglicht, den einstückig ausgebildeten Dekorträger mit integrierter flexibler Airbagklappe in einem einzigen Arbeitsschritt innerhalb eines formgebenden Werkzeugs herzustellen.

Hierbei wird der Rahmen in einem formgebenden Werkzeug angeordnet. Anschließend wird das Dekorträgermaterial in das formgebende Werkzeug eingegeben und bildet anschließend, vorzugsweise durch Aufschäumen, den Dekorträger mit einer oberhalb des Rahmens angeordneten flexiblen Airbagklappe vollständig aus.

In einer bevorzugten Ausführungsform des Verfahrens ist der Rahmen dabei bereits auf seiner Oberseite mit einer zusätzlichen Schicht abgedeckt. Hierdurch wird ein Innenverkleidungsteil erhalten, welches vorzugsweise ohne jeden weiteren Bearbeitungsschritt das Airbagmodul aufnehmen kann, wobei eine Berührung von Airbag und Dekorträgermaterial durch die zusätzliche Schicht sicher unterbunden wird.

Das erfindungsgemäße Verfahren zeichnet sich dadurch aus, dass die verminderte Wandstärke im Bereich der flexiblen Airbagklappe im Wesentlichen während des Formgebungsprozesses für den gesamten Dekorträger eingestellt wird. Das Verfahren ist dadurch besonders zeit- und kostensparend. Überdies wird ein Dekorträger zur Verfügung gestellt, der eine dem Fahrgastraum zugewandte, durchgehende Oberflächenschicht aufweist, wodurch das Bespannen oder Bekleben auch mit hochwertigen Dekormaterialien, beispielsweise Leder, besonders vereinfacht wird.

In einer bevorzugten Ausführungsform des erfindungsgemäßen Verfahrens werden nach der Formgebung zusätzliche Aufreißpunkte und/oder Aufreißlinien in den Dekorträger und/oder die Dekorschicht eingebracht. Hierdurch wird eine sichere und gezielte Entfaltung des Airbags ohne wesentliche Behinderung durch die oberhalb des Airbags angeordneten Dekorträger und Dekorschicht sichergestellt.

In einer besonders bevorzugten Ausführungsform des erfindungsgemäßen Verfahrens stellen diese zusätzlichen Aufreißpunkte und/oder -linien Perforationen oder vorzugsweise von Haltestegen unterbrochene Schwächungslinien dar, welche vorzugsweise durch Fräsen, Bohren, Lasern oder Einschneiden, insbesondere mit erwärmten Schneidwerkzeugen, erzeugt werden. Hierdurch wird ein Verfahren zur Verfügung gestellt, bei dem die Schwächungsbereiche, Aufreißpunkte und -linien besonders einfach und gezielt erzeugt und eingestellt werden können.

In einer weiteren bevorzugten Ausführungsform des erfindungsgemäßen Verfahrens wird der Dekorträger im Wesentlichen aus mit Glasfasern versetztem Polyurethan hergestellt. In einer besonders bevorzugten Ausführungsform weisen die Glasfasern eine Länge auf, durch die die Festigkeit des Dekorträger-Materials besonders vorteilhaft eingestellt wird. In einer ganz besonders bevorzugten Ausführungsform erfolgt die Verbindung der Glasfasern mit dem Polyurethan mittels des Long-Fibre-Injection (LFI)-Verfahrens.

Hierdurch wird ein Verfahren zur Verfügung gestellt, das besonders einfach handhabbar ist und dem Fachmann eine besonders große Bandbreite der Einstellungsmöglichkeiten von Verarbeitbarkeit, Festigkeit und Flexibilität des Materials zur Verfügung stellt.

Die Integration des Rahmens innerhalb des Dekorträgers erfolgt durch Aufschäumen des Dekorträger-Materials sowohl von der Oberseite des Rahmens als auch an dessen Unterseite, so dass der Rahmen vollständig von Dekorträger-Material umgeben ist. In einer weiteren bevorzugten Ausführungsform des erfindungsgemäßen Verfahrens wird der Rahmen derart in dem formgebenden Werkzeug angeordnet, dass der Rahmen in einem Arbeitsgang in dem Dekorträger integriert wird. In einer ganz besonders bevorzugten Ausführungsform ist der Rahmen dabei wiederum an seiner Oberseite von einer zusätzlichen Schicht abgedeckt.

Hierdurch wird ein Verfahren zur Verfügung gestellt, welches eine besonders innige Verbindung von Rahmen und Dekorträger ermöglicht, wodurch das Anbringen und die Abstützung des Airbagmoduls an dem Dekorträger besonders vorteilhaft unterstützt wird.

In einer weiteren bevorzugten Ausführungsform des erfindungsgemäßen Verfahrens wird der Rahmen derart mit dem Dekorträger verbunden, dass die Verbindungsmittel des Dekorträgers, vorzugsweise die Gewindebuchsen, ohne wesentliche Nachbearbeitung für die anschließende Montage des Airbagmoduls zugänglich sind. Hierdurch wird eine besonders kosten- und zeitsparende Herstellung eines Innenverkleidungsteils mit daran angeordnetem Airbagmodul ermöglicht.

### Kurze Beschreibung der Zeichnungen

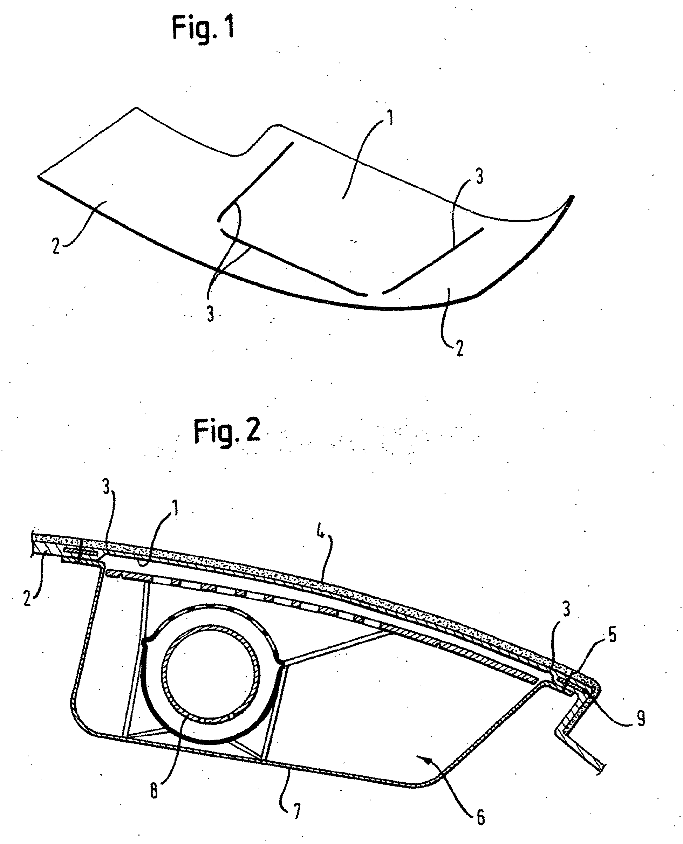

Die Erfindung wird im Folgenden anhand der Figuren 1 und 2 näher erläutert. Die Darstellungen in den Figuren 1 und 2 zeigen dabei lediglich exemplarische Ausführungsformen der Erfindung und sind nicht geeignet, den Erfindungsgedanken in irgendeiner Weise einzuschränken.

Fig. 1 zeigt eine perspektivische Ansicht eines einstückig ausgeformten Dekorträgers mit integrierter flexibler Airbagabdeckung,

Fig. 2 zeigt eine geschnittene Seitenansicht eines mit dem Dekorträger verbundenen Airbagmoduls.

### Wege zur Ausführung der Erfindung

In Fig. 1 wird ein perspektivisch dargestellter Dekorträger 2 gezeigt, dessen Form gemäß den Vorgaben des Fahrzeugherstellers nahezu beliebig ausführbar ist. Innerhalb dieses einstückig ausgebildeten Dekorträgers 2 ist eine flexible Airbagabdeckung 1 angeordnet, deren Form und Ausmaß durch die Öffnungslinien 3 angedeutet ist. Der Dekorträger 2 weist in dem Bereich außerhalb der Öffnungslinien 3 eine im Wesentlichen durchgehende gleiche Wandstärke auf. Innerhalb der Öffnungslinien 3 im Bereich der flexiblen Airbagabdeckung 1 ist die Wandstärke des Dekorträgers 2 jedoch deutlich verringert.

In Fig. 2 ist eine geschnittene Ansicht eines mit einem Dekorträger 2 verbundenen Airbagmoduls 6 dargestellt. Das Airbagmodul 6 weist ein Modulgehäuse 7 auf, in dem ein Gasgenerator 8 unterhalb eines schematisch dargestellten Airbags 7 angeordnet ist. Das Modulgehäuse 7 ist auf seiner dem Dekorträger 2 hingewandten Seite so ausgestaltet, dass es der Unterseite des Dekorträgers 2, somit der dem Fahrzeuginsassen abgewandten Seite des Dekorträgers 2, folgt. Zwischen parallel zu dem Dekorträger 2 angeordneten Umknickkanten des Modulgehäuses 7 und der Unterseite des Dekorträgers 2 ist ein Rahmen 9 in das Dekorträgermaterial integriert. Die Verbindung des Airbagmoduls 6 mit dem Dekorträger 2 erfolgt dadurch, dass geeignete Durchsteckelemente, beispielsweise Schrauben durch die Umknickkanten des Modulgehäuses 7 und den Rahmen 9 hindurch innerhalb des Dekorträgers 2 angeordneten Gewindebuchsen 5 hindurch gesteckt werden. Oberhalb des Dekorträgers 2 ist zusätzlich eine Dekorschicht 4 angeordnet.

## Patentansprüche

1. Flexible Airbagklappe (1) eines Airbagmoduls (6), insbesondere zur Verwendung in Kraftfahrzeugen, wobei
das Airbagmodul (6) an einem mit einem Dekorträger (2) einer Instrumententafel verbundenen Rahmen (9), vorzugsweise einem Metallrahmen, angeordnet und an dem Dekorträger (2), nicht jedoch an einem die Instrumententafel abstützenden Querträger, befestigt ist,
die flexible Airbagklappe (1) im Wesentlichen von dem in dem Airbagmodul (6) angeordneten Airbag abstützbar ist,
der Dekorträger (2) einstückig mit der flexiblen Airbagklappe (1) ausgestaltet ist und im Bereich der flexiblen Airbagklappe (1) eine verminderte Wandstärke aufweist,
**dadurch gekennzeichnet, dass** das Dekorträger-Material aufgeschäumt ist und dass der Rahmen (9) sowohl von seiner Oberseite als auch von seiner Unterseite von Dekorträger-Material umgeben ist, so dass der Rahmen (9) in dem Dekorträger (2) integriert ist.

2. Flexible Airbagklappe (1) nach Anspruch 1, **dadurch gekennzeichnet, dass** die verminderte Wandstärke des Dekorträgers (2) im Bereich der flexiblen Airbagklappe (1) eine Dicke von 1 - 3 mm, vorzugsweise 1,5 - 2 mm aufweist.

3. Flexible Airbagklappe (1) nach einem der voranstehenden Ansprüche, **dadurch gekennzeichnet, dass** der Dekorträger (2) mit einer durchgehenden Dekorschicht (5), vorzugsweise aus Leder oder einem lederähnlichen Material, bedeckt ist.

4. Flexible Airbagklappe (1) nach Anspruch 3, **dadurch gekennzeichnet, dass** die Dekorschicht (5) vorzugsweise in den Randbereichen der flexiblen Airbagklappe (1) zumindest teilweise Schwächungsbereiche aufweist, die als Aufreißpunkte oder -linien (3) bei der Airbagentfaltung dienen.

5. Flexible Airbagklappe (1) nach einem der voranstehenden Ansprüche, **dadurch gekennzeichnet, dass** die flexible Airbagklappe (1) ein oder mehrere Scharniere aufweist, um das/die die flexible Airbagklappe (1) bei Entfaltung des Airbags umklappbar ist.

6. Flexible Airbagklappe (1) nach Anspruch 5, **dadurch gekennzeichnet, dass** das Scharnier oder die Scharniere von vorzugsweise mit den Aufreißlinien (3) fluchtend angeordneten, nicht geschwächten Bereichen des Dekorträgers (2) und/oder der Dekorschicht (5) gebildet sind.

7. Flexible Airbagklappe (1) nach einem der Ansprüche 5 oder 6, **dadurch gekennzeichnet, dass** im Bereich wenigstens eines Scharniers eine zusätzliche flexible Verstärkung, vorzugsweise ein Gewebematerial, mit dem Dekorträger (2) verbunden ist.

8. Flexible Airbagklappe (1) nach einem der voranstehenden Ansprüche, **dadurch gekennzeichnet, dass** die Verbindung zwischen dem Dekorträger (2) und dem Airbagmodul (6) und/oder dem Rahmen (9) über in dem Dekorträger (2) integrierte Verbindungsmittel, vorzugsweise Gewindebuchsen, erfolgt.

9. Flexible Airbagklappe (1) nach einem der voranstehenden Ansprüche, **dadurch gekennzeichnet, dass** zwischen dem Airbag und dem Dekorträger (2) eine zusätzliche Schicht eines flexiblen Materials, vorzugsweise ein PolyamidGewebe, angeordnet ist.

10. Flexible Airbagklappe (1) nach Anspruch 9, **dadurch gekennzeichnet, dass** die zusätzliche Schicht eine Gewebematte, vorzugsweise ein Maschengewebe oder Vlies, aus Thermoplaste, vorzugsweise Polyamid-PVC oder Polyester, ist.

11. Flexible Airbagklappe (1) nach einem der Ansprüche 9 oder 10, **dadurch gekennzeichnet, dass** die zusätzliche Schicht ein Verbund aus wenigstens zwei Lagen, vorzugsweise zumindest teilweise beschichtete Gewebematten, Maschenwaren, Vlies oder Folien aus Kunststoff oder Metall, ist.

12. Flexible Airbagklappe (1) nach einem der Ansprüche 9 - 11, **dadurch gekennzeichnet, dass** die zusätzliche Schicht auch die Außenkanten des Rahmens (9) zumindest teilweise abdeckt.

13. Flexible Airbagklappe (1) nach einem der voranstehenden Ansprüche, **dadurch gekennzeichnet, dass** der Rahmen (9) aus einem vorzugsweise mit Verstärkungsfasern, insbesondere Naturfasern, versetzten Kunststoff besteht.

14. Flexible Airbagklappe (1) nach einem der voranstehenden Ansprüche, **dadurch gekennzeichnet, dass** der Dekorträger (2) im Wesentlichen aus einem vorzugsweise mit insbesondere langen Glasfasern versetzten Polyurethan besteht.

15. Flexible Airbagklappe (1) nach einem der voranstehenden Ansprüche, **dadurch gekennzeichnet, dass** ein flexibles Halteband mit der flexiblen Airbagklappe (1) und dem Dekorträger (2) und/oder dem Rahmen (9) verbunden ist.

16. Verfahren zur Herstellung einer flexiblen Airbagklappe (1) nach einem der voranstehenden Ansprüche, mit den Schritten:
- Anordnen des Rahmens (9) und vorzugsweise der den Rahmen (9) abdeckenden zusätzlichen Schicht in einem formgebenden Werkzeug,
- Verbinden des Rahmens (9) mit einem den Dekorträger (2) und die flexible Airbagklappe (1) bildenden, aufschäumenden Material,
**dadurch gekennzeichnet, dass** der Rahmen (9) nach dem Aufschäumen sowohl von der Oberseite als auch von der Unterseite von dem Dekorträger-Material umgeben ist.

17. Verfahren nach Anspruch 16, **dadurch gekennzeichnet, dass** die verminderte Wandstärke der flexiblen Airbagklappe (1) im Wesentlichen während der Formgebung des Dekorträgers (2) erzeugt wird.

18. Verfahren nach einem der Ansprüche 16 oder 17, **dadurch gekennzeichnet, dass** im Bereich der flexiblen Airbagklappe (1) zusätzliche Aufreißpunkte und/oder - linien (3) in den Dekorträger (2) und/oder die Dekorschicht (5) eingebracht werden.

19. Verfahren nach Anspruch 18, **dadurch gekennzeichnet, dass** die zusätzlichen Aufreißpunkte und/oder -linien (3) Perforationen oder vorzugsweise von Haltestegen unterbrochene Schwächungslinien sind, welche vorzugsweise durch Fräsen, Bohren, Lasern oder Einschneiden mit vorzugsweise erwärmten Schneidwerkzeugen erzeugt werden.

20. Verfahren nach einem der Ansprüche 16 - 19, **dadurch gekennzeichnet, dass** der Dekorträger (2) im Wesentlichen aus mit vorzugsweise langen Glasfasern versetztem Polyurethan hergestellt wird.

21. Verfahren nach Anspruch 20, **dadurch gekennzeichnet, dass** die Verbindung der Glasfasern mit dem Polyurethan mittels des Long-Fibre-Injection (LFI)-Verfahrens erfolgt.

22. Verfahren nach einem der Ansprüche 16 - 21, **dadurch gekennzeichnet, dass** der Rahmen (9) und vorzugsweise die darauf angeordnete zusätzliche Schicht in einem Arbeitsgang in dem Dekorträger (2) integriert hergestellt werden.

23. Verfahren nach einem der Ansprüche 16 - 22, **dadurch gekennzeichnet, dass** das Verbindungsmittel des Dekorträgers (2), vorzugsweise die Gewindebuchsen, ohne Nachbearbeitung für die anschließende Montage des Airbagmoduls (6) zugänglich sind.

## Claims

1. Flexible airbag flap (1) of an airbag module (6), in particular for use in motor vehicles, wherein the airbag module (6) is arranged on a frame (9), preferably a metal frame, connected to a decorative support (2) of a instrument panel and is attached to the decorative support (2), but not to a transverse support supporting the instrument panel, the flexible airbag flap (1) can be supported essentially by the airbag arranged in the airbag module (6), the decorative support (2) is designed to be integral with the flexible airbag flap (1) and in the region of the flexible airbag flap (1) has a reduced wall thickness, **characterised in that** the decorative support material is foamed and **in that** the frame (9) is surrounded by decorative support material both from its upper side and from its lower side, so that the frame (9) is integrated in the decorative support (2).

2. Flexible airbag flap (1) according to claim 1, **characterised in that** the reduced wall thickness of the decorative support (2) in the region of the flexible airbag flap (1) has a thickness of 1 - 3 mm, preferably 1.5 - 2 mm.

3. Flexible airbag flap (1) according to one of the preceding claims, **characterised in that** the decorative support (2) is covered by a continuous decorative layer (5), preferably made from leather or a material similar to leather.

4. Flexible airbag flap (1) according to claim 3, **characterised in that** the decorative layer (5) has at least partly weakened regions preferably in the edge regions of the flexible airbag flap (1), which serve as tear-open points or tear-open lines (3) during airbag deployment.

5. Flexible airbag flap (1) according to one of the preceding claims, **characterised in that** the flexible airbag flap (1) has one or more hinges, about which the flexible airbag flap (1) can be folded when deploying the airbag:

6. Flexible airbag flap (1) according to claim 5, **characterised in that** the hinge or the hinges are formed by non-weakened regions of the decorative support (2) and/or the decorative layer (5) arranged preferably to be aligned with the tear-open lines (3).

7. Flexible airbag flap (1) according to one of claims 5 or 6, **characterised in that** in the region of at least one hinge, an additional flexible reinforcement, preferably a fabric material, is joined to the decorative support (2).

8. Flexible airbag flap (1) according to one of the preceding claims, **characterised in that** the connection between the decorative support (2) and the airbag module (6) and/or the frame (9) is effected via connecting means integrated in the decorative support (2), preferably threaded bushes.

9. Flexible airbag flap (1) according to one of the preceding claims, **characterised in that** an additional layer of a flexible material, preferably a polyamide fabric, is arranged between the airbag and the decorative support (2).

10. Flexible airbag flap (1) according to claim 9, **characterised in that** the additional layer is a fabric mat, preferably a mesh fabric or nonwoven, made from thermoplastics, preferably polyamide-PVC or polyester.

11. Flexible airbag flap (1) according to one of claims 9 or 10, **characterised in that** the additional layer is a composite of at least two layers, preferably at least partly coated fabric mats, mesh goods, nonwoven or films made from plastic or metal.

12. Flexible airbag flap (1) according to one of claims 9 - 11, **characterised in that** the additional layer also at least partly covers the outer edges of the frame (9).

13. Flexible airbag flap (1) according to one of the preceding claims, **characterised in that** the frame (9) consists of a plastic treated preferably with reinforcing fibres, in particular natural fibres.

14. Flexible airbag flap (1) according to one of the preceding claims, **characterised in that** the decorative support (2) consists essentially of a polyurethane treated preferably with in particular long glass fibres.

15. Flexible airbag flap (1) according to one of the preceding claims, **characterised in that** a flexible retaining tape is joined to the flexible airbag flap (1) and the decorative support (2) and/or the frame (9).

16. Process for producing a flexible airbag flap (1) according to one of the preceding claims, having the steps:
- arranging the frame (9) and preferably the additional layer covering the frame (9) in a shaping mould,
- joining the frame (9) to a foaming material forming the decorative support (2) and the flexible airbag flap (1),
**characterised in that** the frame (9) is surrounded by the decorative support material after foaming both from the upper side and from the lower side.

17. Process according to claim 16, **characterised in that** the reduced wall thickness of the flexible airbag flap (1) is produced essentially during shaping of the decorative support (2).

18. Process according to one of claims 16 or 17, **characterised in that** in the region of the flexible airbag flap (1), additional tear-open points and/or tear-open lines (3) are introduced into the decorative support (2) and/or the decorative layer (5).

19. Process according to claim 18, **characterised in that** the additional tear-open points and/or tear-open lines (3) are perforations or weakened lines preferably interrupted by retaining webs, which are produced preferably by milling, drilling, laser-cutting or cutting using preferably heated cutting tools.

20. Process according to one of clams 16-19, **characterised in that** the decorative support (2) is produced essentially from polyurethane treated with preferably long glass fibres.

21. Process according to claim 20, **characterised in that** joining of the glass fibres to the polyurethane is effected by means of the Long-Fibre Injection (LFI) process.

22. Process according to one of claims 16-21, **characterised in that** the frame (9) and preferably the additional layer arranged thereon are produced integrated in the decorative support (2) in one working step.

23. Process according to one of claims 16-22, **characterised in that** the joining means of the decorative support (2), preferably the threaded bushes, are accessible without reworking for the subsequent assembly of the airbag module (6).

## Revendications

1. Couvercle de sac gonflable de sécurité (1) flexible d'un module de sac gonflable de sécurité (6), en particulier pour utilisation dans des véhicules automobiles, où
le module de sac gonflable de sécurité (6) est disposé à un cadre (9), de préférence un cadre métallique, relié à un support de décoration (2) d'un tableau de bord, et est fixé sur le support de décoration (2), cependant pas sur les traverses soutenant le tableau de bord,
le couvercle de sac gonflable de sécurité (1) flexible est susceptible d'être soutenu sensiblement par le sac gonflable de sécurité disposé dans le module de sac gonflable de sécurité (6),
le support de décoration (2) est réalisé d'une seule pièce avec le couvercle de sac gonflable de sécurité (1) flexible et présente une épaisseur de paroi diminuée dans la zone du couvercle de sac gonflable de sécurité (1) flexible,
**caractérisé en ce que** le matériau du support de décoration est rendu alvéolaire et le cadre (9) est entouré, tant par sa face supérieure, qu'également par sa face inférieure, par un matériau de support de décoration, de manière que le cadre (9) soit intégré dans le support de décoration (2).

2. Couvercle de sac gonflable de sécurité (1) flexible selon la revendication 1, **caractérisé en ce que** l'épaisseur de paroi diminuée du support de décoration (2) présente, dans la zone du couvercle de sac gonflable de sécurité (1) flexible, une épaisseur de 1 à 3 mm, de préférence de 1,5 à 2 mm.

3. Couvercle de sac gonflable de sécurité (1) flexible selon l'une des revendications précédentes, **caractérisé en ce que** le support de décoration (2) est couvert par une couche de décoration (5) continue, de préférence en cuir, ou en un matériau analogue à du cuir.

4. Couvercle de sac gonflable de sécurité (1) flexible selon la revendication 3, **caractérisé en ce que** la couche de décoration (5) présente, de préférence dans les zones de bordure du couvercle de sac gonflable de sécurité (1) flexible, des zones d'affaiblissement au moins partiel, servant de points ou de lignes de déchirement (3) lors du déploiement du sac gonflable de sécurité.

5. Couvercle de sac gonflable de sécurité (1) flexible selon l'une des revendications précédentes, **caractérisé en ce que** le couvercle de sac gonflable de sécurité (1) flexible présente une ou plusieurs charnières, autour de laquelle ou desquelles le couvercle de sac gonflable de sécurité (1) est susceptible d'être rabattu lors du déploiement du couvercle de sac gonflable de sécurité.

6. Couvercle de sac gonflable de sécurité (1) flexible selon la revendication 5, **caractérisé en ce que** la charnière ou les charnières est/sont formée(s) par des zones non affaiblies, disposées de préférence en alignement avec les lignes de déchirement (3), du support de décoration (2) et/ou de la couche de décoration (5).

7. Couvercle de sac gonflable de sécurité (1) flexible selon l'une des revendications 5 ou 6, **caractérisé en ce que**, dans la zone au moins d'une charnière, un renforcement flexible supplémentaire, de préférence un matériau en tissu, est relié au support de décoration (2).

8. Couvercle de sac gonflable de sécurité (1) flexible selon l'une des revendications précédentes, **caractérisé en ce que** la liaison entre le support de décoration (2) et le module de sac gonflable de sécurité (6) et/ou le cadre (9) se fait par l'intermédiaire de moyens de liaison, de préférence de douilles ou chevilles filetées, intégrées dans le support de décoration (2).

9. Couvercle de sac gonflable de sécurité (1) flexible selon l'une des revendications précédentes, **caractérisé en ce qu'**entre le sac gonflable de sécurité et le support de décoration (2) est disposée une couche supplémentaire d'un matériau flexible, de préférence un tissu de polyamide.

10. Couvercle de sac gonflable de sécurité (1) flexible selon la revendication 9, **caractérisé en ce que** la couche supplémentaire est un matelas de tissu, de préférence un matelas de maille ou une nappe non-tissée, en thermoplastique, de préférence en polyamide-PVC ou en polyester.

11. Couvercle de sac gonflable de sécurité (1) flexible selon l'une des revendications 9 ou 10, **caractérisé en ce que** la couche supplémentaire est un composite formé d'au moins deux couches, de préférence de matelas textile, de produits en mailles, de non-tissé ou de feuilles, de préférence revêtus au moins partiellement, formés de matière synthétique ou de métal.

12. Couvercle de sac gonflable de sécurité (1) flexible selon l'une des revendications 9 à 11, **caractérisé en ce que** la couche supplémentaire couvre au moins partiellement les arêtes extérieures du cadre (9).

13. Couvercle de sac gonflable de sécurité (1) flexible selon l'une des revendications précédentes, **caractérisé en ce que** le cadre (9) est formé d'une matière synthétique mélangée de préférence à des fibres de renforcement, en particulier des fibres naturelles.

14. Couvercle de sac gonflable de sécurité (1) flexible selon l'une des revendications précédentes, **caractérisé en ce que** le support de décoration (2) est composé essentiellement d'un polyuréthanne, mélangé de préférence avec des fibres de verre, en particulier longues.

15. Couvercle de sac gonflable de sécurité (1) flexible selon l'une des revendications précédentes, **caractérisé en ce qu'**une bande de maintien flexible est reliée au sac gonflable de sécurité flexible et au support de décoration (2) et/ou au cadre (9).

16. Procédé de fabrication d'un couvercle de sac gonflable de sécurité (1) flexible selon l'une des revendications précédentes, comprenant les étapes ci-après :
- agencement du cadre (9) et de préférence de la couche supplémentaire couvrant le cadre (9), dans un outil de formage,
- liaison du cadre (9) à un matériau rendu alvéolaire, formant le support de décoration (2) et le couvercle de sac gonflable de sécurité (1) flexible,
**caractérisé en ce que** le cadre (9), après le moussage, est entouré, tant par la face supérieure, qu'également par la face inférieure du matériau du support de décoration.

17. Procédé selon la revendication 16, **caractérisé en ce que** l'épaisseur de paroi diminuée du couvercle de sac gonflable de sécurité (1) flexible est produite essentiellement pendant le formage du support de décoration (2).

18. Procédé selon l'une des revendications 16 ou 17, **caractérisé en ce que**, dans la zone du couvercle de sac gonflable de sécurité (1) flexible, sont ménagés des points et/ou des lignes d'arrachement (3) supplémentaires, dans le support de décoration (2) et/ou la couche de décoration (5).

19. Procédé selon la revendication 18, **caractérisé en ce que** les points et/ou les lignes d'arrachement (3) supplémentaires sont des perforations ou, de préférence, des lignes d'affaiblissement interrompues par des nervures de maintien, qui, de préférence, sont produites par fraisage, perçage, travail au laser ou entaillage avec des outils de découpage, de préférence chauffés.

20. Procédé selon l'une des revendications 16 à 19, **caractérisé en ce que** le support de décoration (2) est fabriqué essentiellement à partir d'un polyuréthanne mélangé avec des fibres de verre, de préférence longues.

21. Procédé selon la revendication 20, **caractérisé en ce que** la liaison des fibres de verre au polyuréthanne est effectuée au moyen du procédé LFI (Injection de Fibres Longues).

22. Procédé selon l'une des revendications 16 à 21, **caractérisé en ce que** le cadre (9) et, de préférence, la couche supplémentaire disposée sur celui-ci sont fabriqués en une seule passe opératoire, en étant intégrés dans le support de décoration (2).

23. Procédé selon l'une des revendications 16 à 22, **caractérisé en ce que** le moyen de liaison du support de décoration (2), de préférence les douilles ou chevilles filetées, sont accessibles sans réusinage pour la suite du montage du module de sac gonflable de sécurité (6).
